# EUROPEAN PATENT SPECIFICATION

(11) **EP 0 770 541 B1**
(45) Date of publication and mention of the grant of the patent: **24.10.2001**
(21) Application number: 96111439.4
(22) Date of filing: 16.07.1996
(51) Int. Cl.: B62D 65/00, B61B 10/04

(54) **Car body carrier**
Mitnehmer für Fahrzeugkarosserien
Entraîneur pour carrosseries d'automobiles

(30) Priority: 27.10.1995 JP 27952795
(43) Date of publication of application: 02.05.1997
(73) Proprietor: DAIFUKU CO., LTD., Osaka-shi, Osaka (JP)
(72) Inventor: Sugahara, Takeshi, Nishi-Yodogawa-ku, Osaka-shi, Osaka (JP)
(74) Representative: Füchsle, Klaus, Dipl.-Ing.

(56) References cited:
- DE-A- 3 132 177
- FR-A- 1 208 598
- GB-A- 953 680
- GB-A- 1 278 600
- JP-U- 55 167 921

## Description

### FIELD AND BACKGROUND OF THE INVENTION

The present invention relates to apparatus for carrying car bodies between lines of conveyance, inspection, storage, etc. and equipments for finished automobiles in an automobile plant as an example.

The conventional methods for carrying automobiles or other car bodies having wheels between conveyors laid in series to form a conveyance line as an example, or between a conveyor and a lifter include:
1. a method of driving a car body by an operator or a driver in it;
2. a method of transferring a car body onto a pallet and carrying the body on the pallet, as disclosed in Japanese Utility Model First (before exam) Publication S.55-167,921 and Japanese Patent First Publication S.60-19,611 as examples; and
3. a method of traction a car body with a traction means engaged with it.

The above method 1 needs a driver to always be in a place where car bodies are carried, so that the expense is high.

The method 2 needs large motive power and a large apparatus for transferring a car body onto a pallet. In addition, the wheel positions, lifting positions, etc. depend on the types of car bodies, so that the mechanism and control of the transfer means is complex.

The method 3 needs to change the point of engagement of a traction means for different types of car bodies, and therefore needs a complex apparatus as a whole. In addition, the direction of the wheels for steering of a car body being pulled is not fixed to the direction of carriage, so that it is difficult to carry the body precisely and smoothly along a carriage line.

DE-A-31 32 177 discloses an apparatus having the features which are recited in the preamble of claim 1 wherein the front wheel holding means is adapted to lift at least one of the wheels of the car off the ground. Therefore this prior art apparatus has to be designed such that it can support the weight of at least one wheel and that portion of the weight of the car associated thereto. That wheel of the car which is supported by the wheel holding means is elevated and looses contact with the floor. An elevating means has to be provided for slightly lifting a wheel off the floor.

### SUMMARY OF THE INVENTION

It is therefore the object of the present invention to provide an apparatus for carrying a car body precisely and smoothly without needing a driver and large motive power.

A car body carrier according to the invention is an apparatus for carrying a car body having the features recited in claim 1.

Preferred embodimends of the invention are indicated in the dependent claims.

A car body is conveyed to the start end of a carriage path by a conveyance means. The deflection prevention members of the front wheel direction regulation means are put into contact with either the inner or the outer surfaces of the front wheels of the car body to regulate the direction of these wheels in the direction of carriage. The rear hold members of the front wheel hold means are positioned behind the front wheels, while the front hold members are positioned in front of these wheels. Then, the drive means moves the deflection prevention members and the hold members together along the path. This makes the rear hold members push the front wheels forward to propel the car body along the path. The front hold members in front of the front wheels prevent the car body from being moved forward faster than the rear hold members by inertia. The deflection prevention members in contact with the front wheels prevent the direction of these wheels from deflecting or inclining from the direction of carriage. As a result, the car body is carried along the path securely and smoothly at a specified speed. Because the front wheels are allowed to rotate by the various members in contact with them, the car body can travel smoothly with the wheels rotating.

Therefore, there is no need of a driver for driving a car body. Of course, there is no need of large motive power and an apparatus for transferring a very heavy car body onto a pallet for carriage. Because a car body is merely pushed forward with its wheels rotating on the carriage floor, even a large car body which is very heavy can be carried securely and smoothly with relatively small thrust. Although the diameters of the front wheels and the distances between the wheels may vary with the car types, the variation can be coped with easily by the deflection prevention members of the front wheel direction regulation means and the hold members of the front wheel hold means. It is therefore easy to securely put the desired carrying operation into practice regardless of the types of car bodies.

### BRIEF DESCRIPTION OF THE DRAWINGS

Other features and advantages of the present invention will be understood easily from a preferred embodiment of the invention, which is described below in detail with reference to the accompanying drawings, in which:
Fig. 1 is a schematic perspective view of a carrier according to the invention;
Fig. 2 is a plan view of the carrier;
Fig. 3 is a side view of the carrier;
Fig. 4 is a front view partially in lateral cross section of the carrier, showing the right-hand front hold member and left-hand rear hold member of its front wheel hold means;
Fig. 5 is a partial plan view of the carrier, showing the drive of its traveler;
Fig. 6 is a partial side view of the carrier, showing the traveler drive;
Fig. 7 is a partial plan view of the carrier, showing its front wheel direction regulation means;
Fig. 8 is a partial side view in longitudinal cross section of the carrier, showing the frame mover of the front wheel direction regulation means;
Fig. 9 is a partial plan view of the carrier, showing the front wheel hold means;
Fig. 10 is a partial side view of the carrier, showing the front wheel hold means;
Fig. 11 is a partial plan view partially cut away of the carrier, showing one of its floating tables;
Fig. 12 is a partial side view of the carrier, showing the floating table.

### DETAILED DESCRIPTION OF THE EMBODIMENT

With reference to the drawings, the car body carrier according to the embodiment of the present invention carries a car body M with wheels by pushing the front wheels FW, which are idle wheels for steering, between the conveyors constituting the car carriage lines in facilities such as those for manufacturing, inspecting, lifting, elevating and storing cars, or on the carriage lines between the facilities. In this embodiment, the carrier is explained as carrying a car body M, as stated above, on the carriage path L provided from ends of a pair of parallel conveyors for carrying a car body with the wheels supported on them to the specified position from which a car goes out.

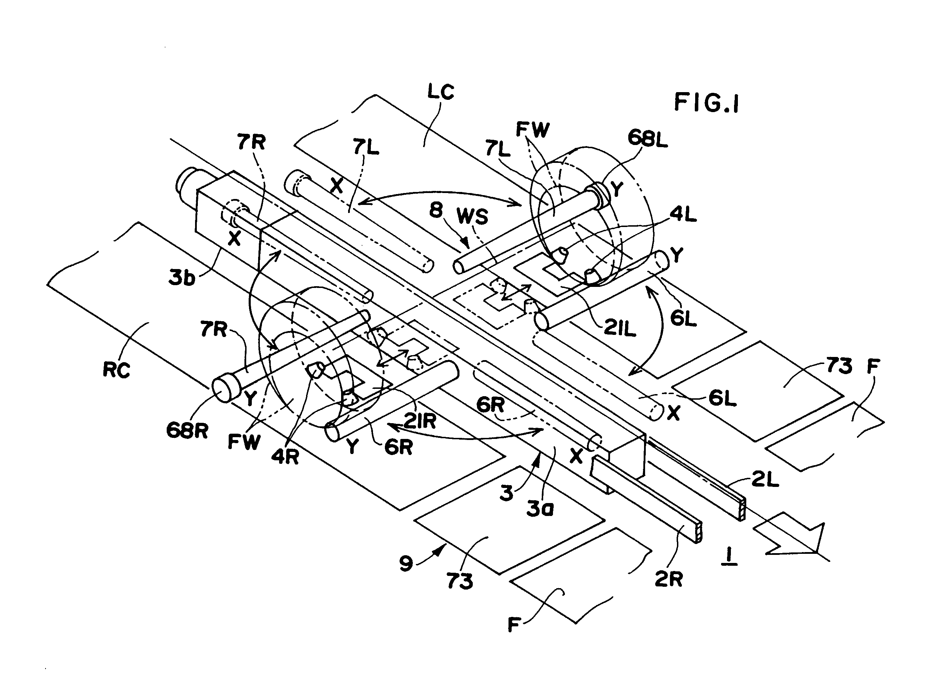

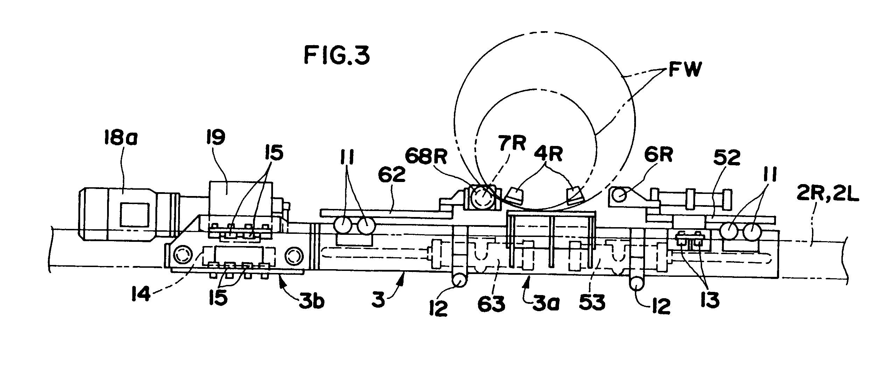

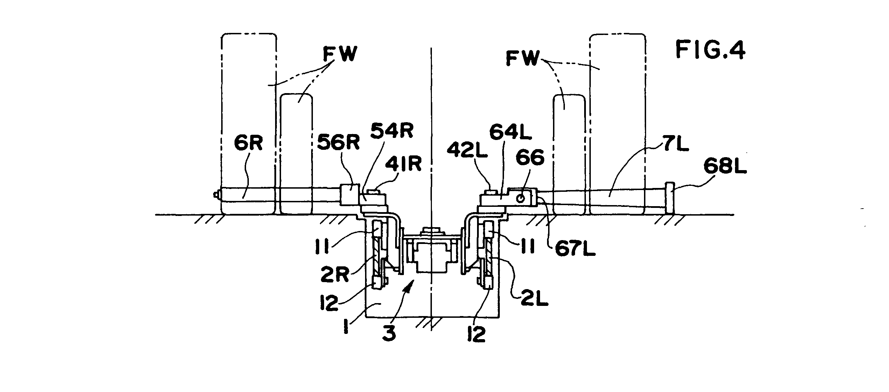

As shown in Figs. 1 - 4, the car body carrier includes a traveler 3, which can travel along the carriage path L. The traveler 3 is supported movably on a pair of guide rails 2R and 2L in the form of vertical flat plates, which are laid oppositely on both sides of a square or rectangular groove 1 in a floor. The groove 1 is formed along the carriage line L from the space between a pair of right and left parallel conveyors RC and LC, which constitute a conveyor line, to the space between a pair of right and left carriage floors F, which are floor divisions. Installed at the outlet of the conveyor line (conveyors RC and LC) are a pair of right and left floating tables 9, which are used to center the car body M. The traveler 3 includes a front wheel direction or orientation regulation means 5 having deflection prevention members 4R and 4L, which are rollers for contact with the inner sides of the right and left front wheels FW of the car body M.

The traveler 3 also includes a front wheel hold means 8, which has a pair of front hold members 6R and 6L and a pair of rear hold members 7R and 7L. The front members 6R and 6L are long rollers positioned in front of the front wheels FW to restrict the front wheels from moving forward. The rear members 7R and 7L are long rollers positioned in the rear of the front wheels FW to push the front wheels forward.

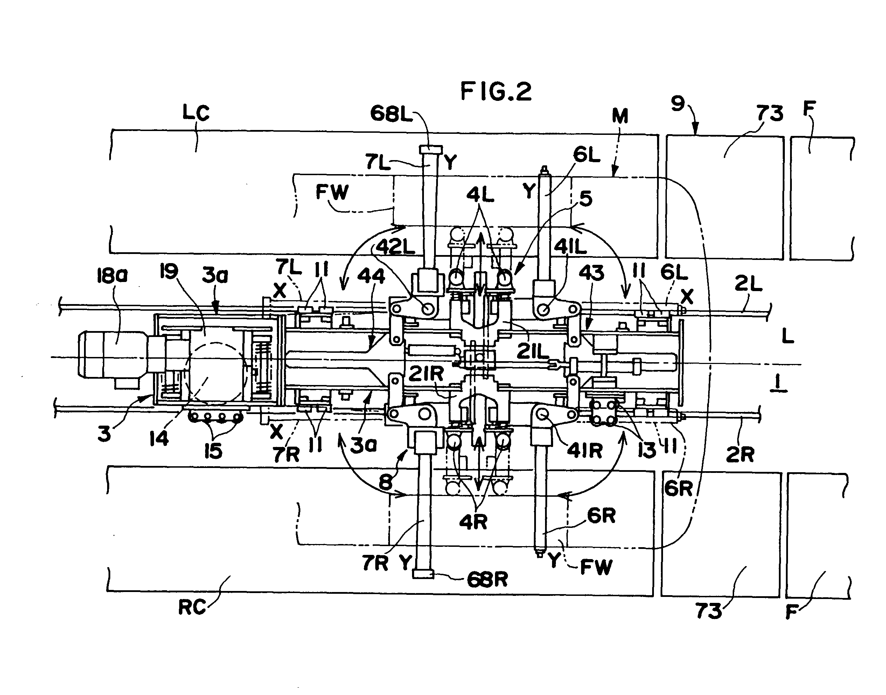

The traveler 3 is a drive means for moving the front wheel direction regulator 5 and holder 8 together along the carriage path L. As shown in Figs. 2 - 4, the traveler 3 includes a carriage 3a and a drive 3b.

The carriage 3a has front and rear support rollers 11, which roll on the upper surfaces of the guide rails 2R and 2L. The carriage 3a also has front and rear flotation or relief preventing rollers 12, which contact with the lower surfaces of the rails. The carriage 3a further has travel direction regulating rollers 13 provided near its front end, which contact with the right and left surfaces of the right rail 2R.

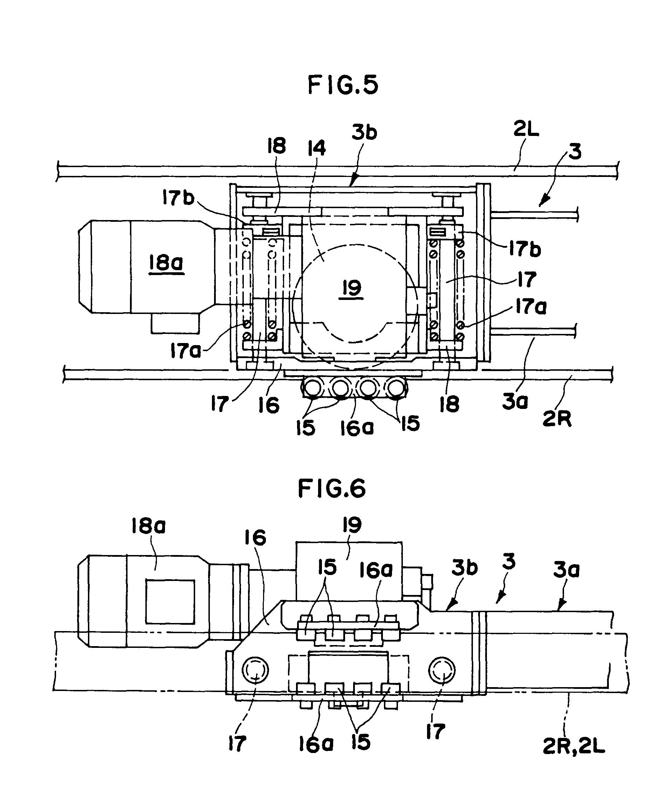

As shown in Figs. 5 and 6, the drive 3b has a drive roller 14 of large diameter, which contacts with the inner side of the right guide rail 2R. The drive 3b also has backup rollers 15 in rows in parallel with the rail 2R. The rollers 15 contact with the outer side of the rail 2R opposite to the drive roller 14. The drive 3b further has a frame 16. Fixed to the frame 16 are a pair of front and rear slide guide rods 17, which extend horizontally at right angles with the rails 2R and 2L. The rods 17 support a movable frame 18, which can slide along it and carries a drive unit 19. The drive unit 19 has a vertical output shaft, which is fixed to the drive roller 14. Fixed to each slide guide rod 17 is a spring shoe 17b. Each rod 17 supports a compression coil spring 17a around it between the shoe 17b and movable frame 18. The springs 17a around the rods 17 urge the movable frame 18 toward the right rail 2R, so that the drive roller 14 engages or contacts compressively with the inner side of the rail 2R. The backup rollers 15 are mounted on the drive frame 16 through brackets 16a.

The drive unit 19 includes a drive motor 18a for rotating the drive roller 14. The motor 18a, its control and other electrical equipment or apparatus on the traveler 3 are fed or energized through a cable (not shown). In such a case that the carriage path L is long, the equipment or apparatus may be fed from a feeding rail through a non-contact current collector or another current collector.

The normal rotation of the drive roller 14 by means of the motor 18a moves the traveler 3 forward along the guide rails 2R and 2L. The reverse rotation of the roller 14 moves the traveler 3 backward.

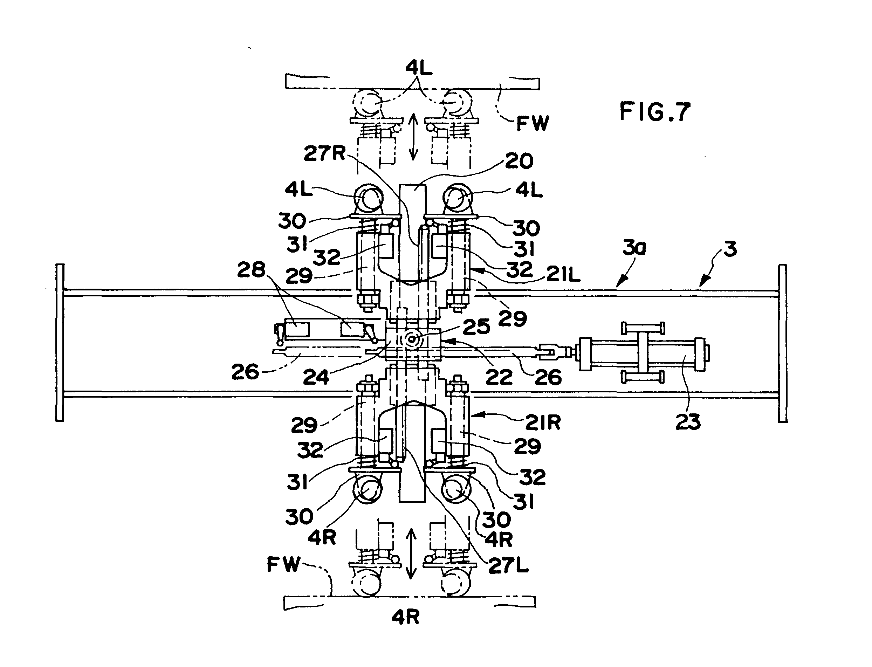

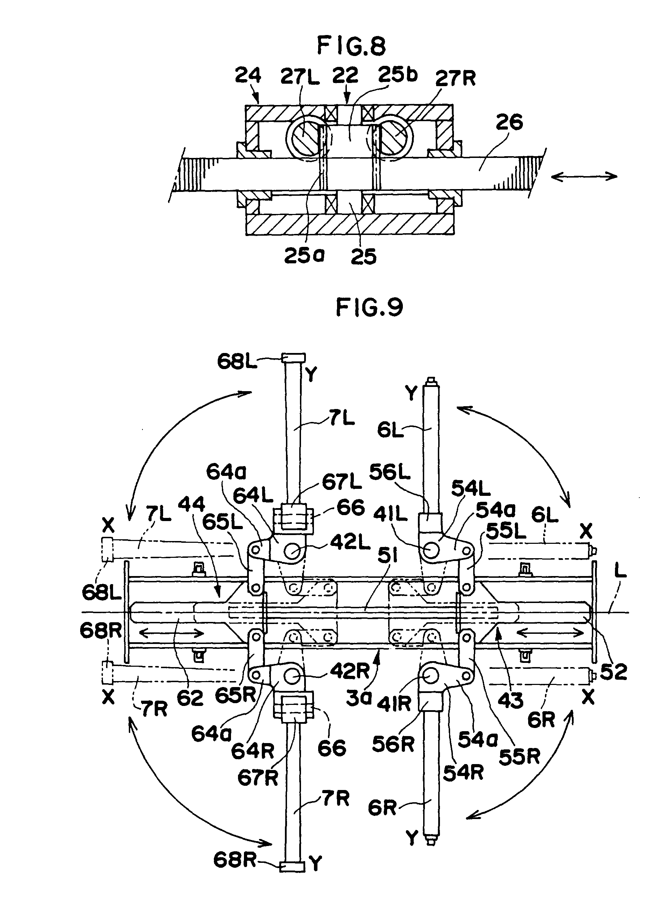

As shown in Figs. 7 and 8, the front wheel direction regulation means 5 carries the front and rear deflection prevention members 4R and 4L in right and left pairs. The regulation means 5 includes a linear guide 20 and a pair of right and left, laterally movable frames 21R and 21L, which are guided by the guide 20, and which can move horizontally and perpendicularly to the guide rails 2R and 2L. The regulation means 5 also includes a frame mover 22 for synchronously protruding and retracting the frames 21R and 21L. The regulation means 5 further includes a cylinder 23 for driving the mover 22 to move the frames 21R and 21L.

The frame mover 22 includes a rack and pinion mechanism. The carriage 3a includes a support frame 24, on which a vertical rotating shaft 25 is supported rotatably. Fixed to the shaft 25 are an input pinion 25a and an output pinion 25b. The piston rod of the cylinder 23 is connected to a rack shaft 26, which is supported on the support frame 24 slidably in parallel to the guide rails 2R and 2L. The teeth of the rack shaft 26 engage with the input pinion 25a. Connected to the laterally movable frames 21R and 21L are a pair of right and left output rack shafts 27R and 27L, respectively. The support frame 24 supports the rack shafts 27R and 27L, which can slide on it horizontally and perpendicularly to the rails 2R and 2L. The rack shafts 27R and 27L have mutually facing teeth, which engage with the output pinion 25b. The limits of sliding movement of the input rack shaft 26 are detected by limit switches 28.

The reciprocation of the piston rod of the cylinder 23 drives the input rack shaft 26 to rotate the pinions 25a and 25b. The rotation of the output pinion 25b reciprocates the output rack shafts 27R and 27L in the mutually opposite directions. Consequently, the laterally movable frames 21R and 21L are protruded or retracted synchronously in lateral symmetry. As a result, each pair of front and rear deflection prevention rollers 4R and 4L contact with the inner side of the adjacent front wheel FW, at a position below the axis of the wheels FW and in longitudinal symmetry.

The laterally movable frames 21R and 21L each support a pair of front and rear, horizontal support rods 29, which can slide laterally thereon. The outer end of each rod 29 has a bracket 30, on which one of the deflection prevention rollers 4R and 4L is supported rotatably. Each rod 29 is urged laterally outward by a compression coil spring 31, which is interposed between the associated frame 21R or 21L and bracket 30. After the rollers 4R and 4L contact with the inner sides of the front wheels FW when the frames 21R and 21L move laterally outward, the springs 31 are compressed, so that the frames 21R and 21L approach the rollers 4R and 4L. The approach is sensed by limit switches 32, which are mounted on the frames 21R and 21L, through the brackets 30. This detects the contact of the rollers 4R and 4L with the wheels FW, so that the cylinder 23 can be stopped automatically.

In this embodiment, the rack-and-pinion frame mover 22 reciprocates the laterally movable frames 21R and 21L with the deflection prevention rollers 4R and 4L synchronously in lateral symmetry. Therefore, if the front wheels FW are dislocated laterally from their centering positions, the frames 21R and 21L stop with only one pair of rollers 4R and 4L contacting with the adjacent wheel FW. This condition can be judged or determined from the states of the limit switches 32 for the respective rollers 4R and 4L. It is therefore possible to judge from the states of the switches 32 whether the wheels FW are centered or not.

As best shown in Fig. 1, the deflection prevention members 4R and 4L are taper rollers, which are smaller upward in diameter so that they contact with the inner surfaces of the tires on the front wheels FW, not directly with the metal wheels. The taper rollers are so inclined that their axes extend near the axis WS of the wheels FW. The height or level of the wheel axis WS varies with the tire diameter of the wheels FW, which depends on the type of the car body M. Therefore, the inclination of the taper rollers is set as stated above by assuming the position of the axis WS of a front wheel of an average tire diameter.

In this embodiment, the carriage path L is linear along the conveyors RC and LC. Therefore, the pairs of front and rear deflection prevention members 4R and 4L are arranged in parallel with the path L. The pair of front wheels FW are regulated to be parallel with the path L by the members 4R and 4L contacting with their inner surfaces, so that the car body M moves straight along the path L. If the path L curved horizontally, the front members 4R and 4L might be dislocated laterally from the rear members, so that the wheels FW might be inclined forcedly in the direction in which the path L curves. Actuators might be provided to move the front and rear pairs of members 4R and 4L independently from each other. The independent lateral movements of the members 4R and 4L could, midway on the path L, change the direction of the wheels FW regulated by these members, to change the direction of movement of the car body M.

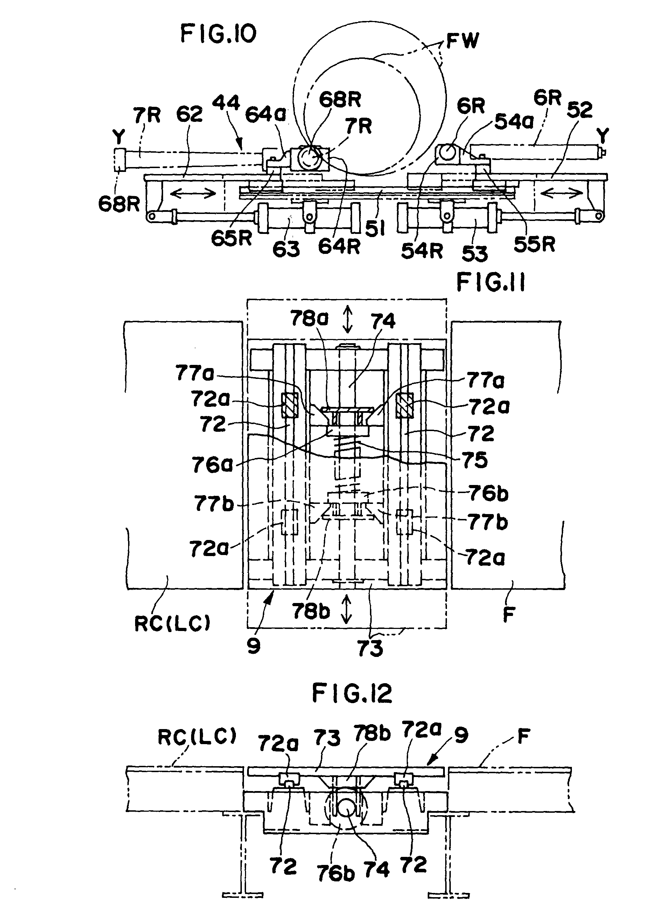

As best shown in Figs. 9 and 10, the front wheel hold means 8 includes the front hold members 6R and 6L, which are long rollers, and the rear hold members 7R and 7L, which are long rollers positioned behind the front wheel FW so as to push the wheels forward. The hold members 6R, 6L, 7R and 7L can be pivoted horizontally by an angle of 90 degrees on their respective vertical pins 41R, 41L, 42R and 42L by front and rear pivoting devices 43 and 44. Consequently, each of these members can be switched between a waiting or standby position X, which is shown by two-dot chain lines, in parallel with the carriage path L and an operating position Y, which is shown by solid lines, at a right angle with the path L.

The carriage 3a of the traveler 3 includes a linear guide 51 in parallel with the carriage path L. The front pivoting device 43 includes a movable frame 52 supported longitudinally movably through a slider on a front portion of the guide 51. The device 43 also includes a cylinder 53 for reciprocating the frame 52 longitudinally. The front hold rollers 6R and 6L are supported in the form of cantilevers by the roller bearings 56R and 56L at the outer ends of L-shaped arms 54R and 54L, respectively. The arms 54R and 54L can pivot or turn on the vertical pins 41R and 41L, respectively. The outer ends of the front portions 54a of the arms 54R and 54L are connected to the frame 52 through links 55R and 55L, respectively.

The rear pivoting device 44 includes a movable frame 62, which is supported longitudinally movably through a slider on a rear portion of the linear guide 51. The device 44 also includes a cylinder 63 for longitudinally reciprocating the frame 62. The rear hold rollers 7R and 7L are supported in the form of cantilevers by roller bearings 67R and 67L, respectively. The bearings 67R and 67L are supported pivotably in vertical planes by the longitudinal pins 66 on the outer ends of L-shaped arms 64R and 64L, respectively. The arms 64R and 64L can pivot on the vertical pins 42R and 42L, respectively. The outer ends of the rear portions 64a of the arms 64R and 64L are connected to the frame 62 through links 65R and 65L, respectively. Therefore, the rollers 7R and 7L can pivot upward on the horizontal pins 66 to avoid obstacles on the carriage floors F.

The front and rear pivoting devices 43 and 44 are so constructed that, when the front and rear hold members 6R, 6L, 7R and 7L are in their respective operating positions Y, the front and rear portions 54a and 64a of the L-shaped arms 54R, 54L, 64R and 64L are parallel with the directions in which the movable frames 52 and 62 move, and the links 55R, 55L, 65R and 65L are perpendicular to these directions. Accordingly, the moments which the members 6R, 6L, 7R and 7L receive from the front wheels FW are born by the compressive stresses of the respective links 55R, 55L, 65R and 65L, so that any force which moves the frames 52 and 62 is not generated. Therefore, these moments do not act on the cylinders 53 and 63 for reciprocating the frames 52 and 62. As a result, there is no need for the cylinder 63 of the rear pivoting device 44 to directly bear the large reaction force applied particularly on the rear hold members 7R and 7L when a car body M which is 200 Kg or heavier is started. It is therefore possible to make the cylinder 63 relatively small in size and capacity.

The rear hold members 7R and 7L are taper rollers, which are larger in diameter toward their free ends. Consequently, when the rollers 7R and 7L contact with the front wheels FW and push them forward, the directions of the pushing forces are inclined a little toward the center of the car body M. The free ends larger in diameter of the rollers 7R and 7L support receiving rollers 68R and 68L, respectively, which are even larger in diameter and rotatable on them.

The pair of right and left floating tables 9 shown in Fig. 1 are of the same structure. As shown in Figs. 11 and 12, the tables 9 are placed in a pair of right and left pits 71, respectively, which are each formed in one of the carriage floors F. Each table 9 includes a table body 73, which is supported laterally movably through sliders 72a on a pair of right and left linear guides 72 in one of the pits 71. The table body 73 is flush with the associated floor F. Between the guides 72 extends a lateral guide shaft 74 in parallel with them, on which a pair of right and left spring shoes 76a and 76b are supported slidably. The shaft 74 also supports a compression coil spring 75 between the shoes 76a and 76b, which are urged on stoppers 77a and 77b, respectively, by the spring 75. The table body 73 has a pair of right and left brackets 78a and 78b projecting from its lower surface. The brackets 78a and 78b contact with the outer surfaces of the shoes 76a and 76b, respectively, as stopped by the respective stoppers 77a and 77b as stated above.

If the front wheels FW of a car body M conveyed by the conveyors RC and LC are not centered, only one of the right and left pairs of deflection prevention rollers 4R and 4L contact with the inner side of the adjacent wheel FW, as explained above, because of the structure of the frame mover 22 of the front wheel direction regulation means 5. The onesided contact can be detected by the signals from the limit switches 32. Consequently, if a car body M not centered has been conveyed out and its front wheels FW have transferred onto the table bodies 73 of the floating tables 9, then the cylinder 23 is actuated to urge the rollers 4R and 4L outward. This causes the compressive force or pressure of the rollers 4R or 4L contacting with the wheel FW which is inside its centering position to act on the car body M through this wheel FW. As a result, the wheels FW move laterally toward their centering positions together with the car body M and table bodies 73. If the wheels FW have reached the centering positions, the rollers 4R and 4L contact with the inner sides of both wheels FW at a nearly equal pressure. This condition is detected by the limit switches 32, so that the cylinder 23 is automatically stopped.

When the table bodies 73 move toward one of the right and left sides during centering, the brackets 78a or 78b on the other side compress the springs 75 through the adjacent spring shoes 76a or 76b. When the front wheels FW have moved from the table bodies 73 onto the carriage floors F after centering, the bodies 73 having moved laterally with the wheels FW are returned automatically to their original positions by the restoring force or pressure of the springs 75.

As explained above, when the front wheels FW have transferred onto the table bodies 73 of the floating tables 9, the cylinder 23 of the front wheel direction regulation means 5 is actuated again. Alternatively, if it is judged by the detection signals from the limit switches 32 that the wheels FW of a car body M at the downstream end positions of the conveyors RC and LC are not centered, when the deflection prevention members 4R and 4L of the means 5 are operated on the wheels FW, it might be possible to keep the cylinder 23 operating, with the centering force acted on the wheels FW, while the car body M is carried until the wheels FW have moved onto the tables 9.

Explained below in detail is the method for carrying a car body M by means of the carrier described above.

A car body M is conveyed at a specified speed with their right and left wheels on the conveyors RC and LC, respectively. The car body M being conveyed is fitted with a hand brake, a gear shifter, etc., which are free or neutral so that all of the wheels can idle. The wheels for steering, which may be the front wheels FW, are directed nearly forward or straight, but are not fixed and may therefore be somewhat inclined. A detector (not shown) detects the arrival of the car body M at specified positions near the downstream ends of the conveyors RC and LC. This starts the traveler 3, which has waited at the start end position on the carriage path L. The start end position is upstream from the downstream ends of the conveyors RC and LC. The started traveler 3 travels forward in synchronism with the car body M on the conveyors RC and LC. Alternatively, the conveyors RC and LC are stopped.

Then, the cylinder 23 of the front wheel direction regulation means 5 is actuated to make the frame mover 22 move the laterally movable frames 21R and 21L outward. This makes the deflection prevention members 4R and 4L contact with the inner side of at least one of the front wheels FW. At the same time, the front and rear pivoting devices 43 and 44 of the front wheel hold means 8 are driven to turn the front and rear hold members 6R, 6L, 7R and 7L by the angle of 90 degrees from the waiting positions X to the operating positions Y. This makes the front and rear hold members extend respectively in front of and behind the wheels FW. If the conveyors RC and LC are stopped, the traveler 3 is started to travel forward at this stage.

If the traveler 3 travels in synchronism with the conveyors RC and LC, the rear hold members 7R and 7L start to contact with rear portions of the front wheels FW and push the wheels FW forward, when the car body M has left the downstream ends of the conveyors. If the conveyors RC and LC stop and only the traveler 3 travels, the travel makes these members 7R and 7L push the wheels FW forward.

The rear hold members 7R and 7L push the circular or circumferential tire surfaces below the axes of the front wheels FW, so that downward reaction is applied to these members. The receiving rollers 68R and 68L on the free ends of these members 7R and 7L contact with the carriage floors F, so that the downward reaction is born by the floors. As a result, the members 7R and 7L are kept substantially horizontal. Therefore, the members 7R and 7L cannot be positioned under the wheels FW, but can securely push them to move the car body M forward. In addition, no excessive force acts on the roots of the members 7R and 7L.

The rear hold members 7R and 7L are taper rollers, which are larger in diameter toward their free ends. Therefore, the directions of the pushing forces on the front wheels FW can be inclined a little toward the center of the car body M and out of parallel with the direction of carriage. This enables the car body M to travel stably. The members 7R and 7L can swing upward on the pins 66, which are parallel with the direction of carriage, so as to easily avoid any obstacles on the carriage floors F.

If the car body M is not centered, the cylinder 23 causes the deflection prevention members 4R or 4L to apply centering force to the front wheel FW dislocated inward, as already explained, when the front wheels FW have transferred from the conveyors RC and RL to the table bodies 73 of the floating tables 9. This moves the front of the car body M laterally together with the table bodies 73 to center the front. Then, the wheels FW are pushed to move from the table bodies 73 onto the carriage floors F, so that the rear of the car body M follows and moves laterally. As a result, the car body M as a whole is centered.

If the car body M reaches the downstream end of the carriage path L (end of the travel path for the traveler 3), the traveler 3 is stopped. Then, the cylinder 23 of the front wheel direction regulation means 5 is actuated to retract the laterally movable frames 21R and 21L with the deflection prevention members 4R and 4L away from the front wheels FW. In addition, the front and rear pivoting devices 43 and 44 of the front wheel hold means 8 are actuated to switch the front and rear hold members 6R, 6L, 7R and 7L from the operating positions Y to the waiting positions X by turning these members by the horizontal angle of 90 degrees. Thereafter, the traveler 3 is moved backward to return to the start end position of the path L.

Features of this embodiment are as follows.

1. The traveler 3 travels along the carriage path L in the middle between the wheel movement lanes of the path L. The traveler 3 is the drive means for moving the front wheel direction regulation means 5 and front wheel hold means 8 together along the path L. The traveler 3 supports the right and left pairs of deflection prevention members 4R and 4L of the front wheel direction regulation means 5 in such a manner that each of the members can move laterally between the operating position, where it can contact with the inner side of the adjacent front wheel FW of a car body, and the waiting position inwardly spaced from the wheel FW. The traveler 3 also supports the pair of right and left, front hold members 6R and 6L and the pair of right and left, rear hold members 7R and 7L of the front wheel hold means 8 in such a manner that each of the members can change over between the operating position Y in front of, or behind, the adjacent front wheel FW and the waiting position X inwardly out of the adjacent front wheel movement lane.

This construction enables the single traveler 3 to support the deflection prevention members 4R and 4L of the front wheel direction regulation means 5 and the front and rear hold members 6R, 6L, 7R and 7L of the front wheel hold means 8. It is therefore possible to make the whole apparatus small and simple.

2. In the above construction 1, the front and rear hold members 6R, 6L, 7R and 7L are supported horizontally swingably at their ends which are inside when they are at the operating positions Y by the vertical pins 41R and 41L or 42R and 42L on the traveler 3. The front hold members 6R and 6L can turn forward and inward by 90 degrees to change over from the operating positions Y to the waiting positions X. The rear hold members 7R and 7L can turn backward and inward by 90 degrees to change over from the operating positions Y to the waiting positions X.

This construction simplifies the mechanisms for switching the hold members 6R, 6L, 7R and 7L between the operating and waiting positions, in comparison with a case where hold members slide laterally to retract to their waiting positions between wheel movement lanes. It is also easy to make these hold members long enough to cope with large change of the distance between the front wheels of a car body.

3. In the above construction 2, the traveler 3 as the drive means includes the pair of front and rear, driving movable frames 52 and 62, which can move longitudinally. Provided at the pivotal end of each hold member 6R, 6L, 7R or 7L is the arm portion 54a or 64a, which protrudes forward or backward when the hold member is at its operating position Y. The arm portions 54a and 64a are connected with the movable frames 52 and 62, respectively, by the links 55R, 55L, 65R and 65L in such a manner that the longitudinal movements of the frames 52 and 62 turns the hold members 6R, 6L, 7R and 7L horizontally by 90 degrees. At least the rear links 65R and 65L each between the associated rear hold member 7R or 7L and the rear movable frame 62 are directed laterally when the rear hold members 7R and 7L are at the operating positions Y.

This construction enables the compressive stresses of the links 65R and 65L to bear the large reaction forces applied on the rear hold members 7R and 7L pushing at the operating positions Y the front wheels FW of a very heavy car body M when the body M is started. As a result, there is no need to move the rear movable frame 62 longitudinally. Therefore, the cylinder or actuator 63 for moving the frame 62 can be small in size and relatively small in capacity.

4. The deflection prevention members 4R and 4L of the front wheel direction regulation means 5 consist of a right pair and a left pair of front and rear rollers for contact with sides of the front wheels of a car body. The rollers can contact with these wheels below the axis of the wheels and each at two places forward and backward from the axis. The rollers are so inclined that their axes extend near the wheel axis.

This construction enables the direction of the front wheels FW to be regulated securely by the rollers 4R and 4L contacting with the front and rear places of the wheels FW. The rollers 4R and 4L contacting with the wheels FW do not make the rotating resistance of the wheels FW so high as to hinder the car body from traveling smoothly.

5. The hold members 6R, 6L, 7R and 7L of the front wheel hold means 8 consist of long rollers.

This construction prevents the rotating resistance of the" front wheels from being high. In addition, car bodies can be pushed with the front wheels FW held without hindrance even if the distance between the wheels FW varies with the car types within the range of the lengths of the rollers 6R, 6L, 7R and 7L.

6. The rear hold members 7R and 7L of the front wheel hold means 8 consist of long taper rollers, which are larger in diameter toward their free ends.

This construction inclines a little toward the center of a car body M, not in parallel with the direction of carriage, the directions of the forces of the rollers 7R and 7L pushing the front wheels FW of the car body. It is therefore possible to make the car body M travel straight and stably.

7. The rear hold members 7R and 7L of the front wheel hold means 8 are supported at their pivotal ends swingably in vertical planes on the longitudinal pins 66. The free ends of the members 7R and 7L support the rollers 68R and 68L, which can rotate on the carriage floor F.

This construction enables the floor F to bear through the rollers 68R and 68L the downward reaction forces applied on the rear hold members 7R and 7L contacting with the circumferential tire surfaces of the front wheels FW of a car body below the axis of these wheels to push the wheels. Accordingly, the members 7R and 7L are kept nearly horizontal and from being positioned under the wheels FW. Therefore, the members 7R and 7L can securely push the wheels FW to move the car body M forward. In addition, no excessive force is applied on the roots of the members 7R and 7L. The members 7R and 7L can swing upward on the pins 66, and therefore easily avoid obstacles, if any, on the floor F.

8. The frame mover 22 can move the right and left pairs of deflection prevention members 4R and 4L of the front wheel direction regulation means 5 toward and away from each other synchronously in lateral symmetry. The cylinder 23 presses through the mover 22 these members 4R and 4L on sides of the front wheels FW of a car body. The floating tables 9 for receiving the front wheels FW of a car body include the table bodies 73, which can move laterally, and the springs 75 for keeping these bodies 73 in the neutral positions. While the wheels FW are placed on the table bodies 73, they can be centered laterally together with the bodies 73 by the operation of the members 4R or 4L pushing one of the wheels FW.

This construction enables the front wheels FW of a car body M, and eventually the whole car body, to be centered at the start or beginning of carriage or at a suitable time during carriage by using the deflection prevention members 4R and 4L of the front wheel direction regulation means 5, which is necessary to move the car body M along the carriage path, only in cooperation with the floating tables 9 without needing other special motive power.

## Claims

1. An apparatus for moving a car body (M) having wheels along a predetermined carrying path (L), comprising
a front wheel holding means (8) having a pair of rear side holding members (7R, 7L) adapted to be positioned at the rear sides of the front wheels (FW) of the car body (M)
and a pair of front side holding members (6R, 6L) adapted to be positioned at the front sides of the front wheels (FW); and
a driving means (3) adapted to move the front wheel holding means (8) along the carrying path (L) ;
***characterized in that***
the rear side holding members (7R, 7L) are adapted to push the front wheels (FW) from the rear sides thereof while keeping contact with the outer peripheral surfaces of the front wheels (FW) which roll by themselves;
the front side holding members (6R, 6L) are adapted to prevent the front wheels (FW) from rolling forward away from the rear side holding members (7R, 7L) ;
a front wheel direction regulating means (5) is provided which is moved integrally with the front wheel holding means (8); and
the front wheel direction regulating means (5) includes right and left deflection preventing members (4R, 4L) for regulating the direction of movement of the front wheels (FW) to the carrying direction by contacting the lateral side surfaces of the front wheels (FW) which roll by themselves.

2. An apparatus according to claim 1,
wherein the carrying path includes a pair of wheel rolling lanes,
said driving means comprises a traveler (3) adapted to travel in the middle between the lanes along the path,
said deflection preventing members (4R, 4L) of the front wheel direction regulating means (5) are each supported on the traveler (3) and are so arranged as to move laterally between an operating position to come into contact with an inner lateral side surface of the adjacent front wheel (FW) and a waiting position receding inwardly from the wheels,
said front side holding members (6R, 6L) of the front wheel holding means (5) are each supported on said traveler (3) and are so arranged as to be shifted switchably between an operating position (Y) in front of the adjacent front wheel (FW) and a waiting position (X) receding inwardly relative to the associated wheel rolling lanes, and
said rear side holding members (7R, 7L) at right and left sides of the front wheel holding means (8) are each supported on said traveler (3) and are so arranged as to be shifted switchably between an operating position (Y) at the rear of the adjacent front wheel (FW) and a waiting position (X) receding inwardly relative to the associated wheel rolling lanes.

3. An apparatus according to claim 2,
wherein said front and rear side holding members (6R, 6L, 7R, 7L) of the front wheel holding means (8) each have a base end supported on the traveler (3) by way of a vertical pin (41R,41L, 42R, 42L) pivotable horizontally so that the front side holding members (6R, 6L) are switchable from the operating positions (Y) to the waiting positions (X) by swinging forwardly through 90 degrees, and the rear side holding members (7R, 7L) are switchable from the operating positions (Y) to the waiting positions (X) by swinging rearwardly through 90 degrees.

4. An apparatus according to claim 3,
wherein said traveler (3) of the driving means is provided with a pair of front and rear driving sliders (52, 62) capable of sliding forwardly and rearwardly, the front and rear side holding members (6R, 6L, 7R, 7L) have an arm (54a, 64a) at the base end interconnected by a link (55R, 5L, 65R, 65L) to the front and rear sliders (52, 62), respectively, so that the holding members (6R, 6L, 7R, 7L) are swung horizontally through 90 degrees by sliding forwardly and rearwardly, the arms (54a, 64a) are directed forwardly or rearwardly when the front and rear side holding members (6R, 6L, 7R, 7L) are put in the operating positions (Y), and the links at least between the rear side holding members (7R, 7L) and the rear slider (62) are directed laterally when the holding members are put in the operating positions (Y).

5. An apparatus according to any one of claims 1 - 4,
wherein the right and left deflection preventing members (4R, 4L) of the front wheel direction regulating means (5) each comprise a pair of front and rear rollers adapted to come into contact with the lateral side surface of the adjacent front wheel (FW) at front and rear lower positions with respect to an axle connected to the front wheels, and one pair of the rollers is arranged so inclined that the axis of each of the rollers extends near the axle of the wheel.

6. An apparatus according to any one of claims 1 to 5,
wherein the front and rear side holding members (6R, 6L, 7R, 7L) of the front wheel holding means (8) each comprise an elongated roller.

7. An apparatus according to any one of claims 1 to 6,
wherein the rear side holding members (7R, 7L) of the front wheel holding means (8) each comprise an elongated roller the diameter of which increases toward an outer free end thereof.

8. An apparatus according to any one of claims 1 to 7,
wherein the rear side holding members (7R, 7L) of the front wheel holding means (8) each have the base end pivoted with a horizontal pin (66) on the drive means so as to swing up and down, and have the outer free end provided with a roller (68R, 68L) pivoted thereon so as to roll on the floor.

9. An apparatus according to any one of claims 1 to 8,
wherein the front wheel regulating means (5) further comprises a stretching mechanism (22) for moving the deflection preventing members (4R, 4L) on right and left sides nearer to or farther from each other synchronously and symmetrically, and a pressing mechanism (23) for pressing the deflection preventing members (4R, 4L) against the lateral side surfaces of the front wheels (FW) by way of said stretching mechanism (22); the floor is provided with right and left floating tables (9) for sustaining the front wheels (FW); the floating tables (9) each having a table body (73) capable of moving laterally, and a spring (75) for keeping the table body (73) at a neutral position, whereby the front wheels (FW) can be centered laterally together with the table body (73) by a pressing operation of the deflecting preventing members (4R, 4L) against the front wheels when the front wheels are on the table body (73).

## Patentansprüche

1. Einrichtung zur Bewegung einer Fahrzeugkarosserie (M), welche Räder aufweist, entlang einem vorbestimmten Transportweg (L), mit
einer Vorderrad-Haltevorrichtung (8), die ein Paar von Rückseiten-Halteteilen (7R, 7L) aufweist, die so ausgebildet sind, dass sie an den Rückseiten der Vorderräder (FW) der Fahrzeugkarosserie (M) angeordnet werden können
sowie ein Paar von Vorderseiten-Halteteilen (6R, 6L), die so ausgebildet sind, dass sie an den Vorderseiten der Vorderräder (FW) angeordnet werden können; und
eine Antriebsvorrichtung (3), die so ausgebildet ist, dass sie die Vorderrad-Haltevorrichtung (8) entlang dem Transportweg (L) bewegt;
**dadurch gekennzeichnet, dass**
die Rückseiten-Halteteile (7R, 7L) dazu ausgebildet sind, die Vorderräder (FW) von deren Hinterseiten aus zu drücken, während sie Kontakt mit den Außenumfangsoberflächen der Vorderräder (FW) halten, die von selbst rollen;
die Vorderseiten-Halteteile (6R, 6L) dazu ausgebildet sind, zu verhindern, dass die Vorderräder (FW) nach vorn weg von den Rückseiten-Halteteilen (7R, 7L) rollen;
eine Vorderrad-Richtungseinstellvorrichtung (5) vorgesehen ist, die zusammen mit der Vorderrad-Haltevorrichtung (8) bewegt wird; und
die Vorderrad-Richtungseinstellvorrichtung (5) ein rechtes und ein linkes Auslenkungsverhinderungsteil (4R, 4L) aufweist, zum Einstellen der Bewegungsrichtung der Vorderräder (FW) auf die Transportrichtung, durch Berühren der Seitenoberflächen in Querrichtung der Vorderräder (FW), die von selbst rollen.

2. Einrichtung nach Anspruch 1, bei welcher der Transportweg ein Paar von Radrollspuren aufweist,
die Antriebsvorrichtung einen Vorschubwagen (3) umfasst, der so ausgebildet ist, dass er sich in der Mitte zwischen den Spuren entlang dem Weg bewegt,
die Auslenkungsverhinderungsteile (4R, 4L) der Vorderrad-Richtungseinstellvorrichtung (5) jeweils auf dem Vorschubwagen (3) gehaltert sind, und so angeordnet sind, dass sie sich in Querrichtung zwischen einer Betriebsposition, in welcher sie in Kontakt mit einer inneren Seitenoberfläche in Querrichtung des benachbarten Vorderrades (FW) gelangen, und einer Warteposition bewegen, in der sie nach innen gegenüber den Rädern zurückgezogen sind,
die Vorderseiten-Halteteile (6R, 6L) der Vorderrad-Haltevorrichtung (5) jeweils auf dem Vorschubwagen (3) gehaltert sind, und so angeordnet sind, dass sie umschaltbar zwischen einer Betriebsposition (Y) vor dem benachbarten Vorderrad (FW) und einer Warteposition (X) verschoben werden, die nach innen in Bezug auf die zugehörige Radrollspur zurückgezogen angeordnet ist, und die Rückseiten-Halteteile (7R, 7L) an der rechten bzw. linken Seite der Vorderrad-Haltevorrichtung (8) jeweils auf dem Vorschubwagen (3) gehaltert sind, und so angeordnet sind, dass sie umschaltbar zwischen einer Betriebsposition (Y) an der Rückseite des benachbarten Vorderrades (FW) und einer Warteposition (X) verschoben werden können, die nach innen in Bezug auf die zugehörige Radrollspur weiter innen angeordnet ist.

3. Einrichtung nach Anspruch 2, bei welcher die Vorderseiten- und Rückseiten-Halteteile (6R, 6L, 7R, 7L) der Vorderrad-Haltevorrichtung (8) jeweils ein Basisende aufweisen, das auf dem Vorschubwagen (3) mit Hilfe eines vertikalen Stiftes (41R, 41L, 42R, 42L) gehaltert ist, der horizontal verschwenkbar ist, so dass die Vorderseiten-Halteteile (6R, 6L) dadurch von den Betriebspositionen (Y) in die Wartepositionen (X) umgeschaltet werden können, dass sie über 90 ° nach vorn geschwenkt werden, und die Rückseiten-Halteteile (7R, 7L) dadurch von den Betriebspositionen (Y) in die Wartepositionen (X) umgeschaltet werden können, dass sie über 90 ° nach hinten geschwenkt werden.

4. Einrichtung nach Anspruch 3, bei welcher der Vorschubwagen (3) der Antriebsvorrichtung mit einem Paar aus einem vorderen und hinteren Antriebsgleitstück (52, 62) versehen ist, die nach vorn und hinten gleiten können, die Vorderseiten- und Rückseiten-Halteteile (6R, 6L, 7R, 7L) einen Arm (54a, 64a) am Basisende aufweisen, der durch eine Lasche (55R, 55L, 65R, 65L) mit dem vorderen bzw. hinteren Gleitstück (52, 62) verbunden ist, so dass die Halteteile (6R, 6L, 7R, 7L) horizontal über 90 ° durch Gleiten nach vorn und hinten verschwenkt werden, die Arme (54a, 64a) sich nach vorn oder hinten erstrecken, wenn die Vorderseiten- und Rückseiten-Halteteile (6R, 6L, 7R, 7L) in die Betriebspositionen (Y) eingestellt sind, und die Laschen zumindest zwischen den Rückseiten-Halteteilen (7R, 7L) und dem hinteren Gleitstück (62) in Querrichtung verlaufen, wenn die Halteteile in die Betriebspositionen (Y) eingestellt werden.

5. Einrichtung nach einem der Ansprüche 1 - 4, bei welcher das rechte und linke Auslenkungsverhinderungsteil (4R, 4L) der Vorderrad-Richtungseinstellvorrichtung (5) jeweils ein Paar aus einer vorderen und einer hinteren Rolle aufweisen, die dazu ausgebildet sind, in Kontakt mit der Seitenoberfläche in Querrichtung des benachbarten Vorderrades (FW) an vorderen und hinteren, niedrigeren Positionen in Bezug auf eine Achse zu gelangen, die mit den Vorderrädern verbunden ist, und ein Paar der Rollen so geneigt angeordnet ist, dass die Achse jeder der Rollen in der Nähe der Achse des Rades verläuft.

6. Einrichtung nach einem der Ansprüche 1 - 5, bei welcher die Vorderseiten- und Rückseiten-Halteteile (6R, 6L, 7R, 7L) der Vorderrad-Haltevorrichtung (8) jeweils eine längliche Rolle aufweisen.

7. Einrichtung nach einem der Ansprüche 1 - 6, bei welcher die Rückseiten-Halteteile (7R, 7L) der Vorderrad-Haltevorrichtung (8) jeweils eine längliche Rolle aufweisen, deren Durchmesser in Richtung auf ihr äußeres freie Ende hin zunimmt.

8. Einrichtung nach einem der Ansprüche 1 - 7, bei welcher die Rückseiten-Halteteile (7R, 7L) der Vorderrad-Haltevorrichtung (8) so ausgebildet sind, dass das Basisende drehbar mit einem horizontalen Stift (66) auf der Antriebsvorrichtung angelenkt ist, so dass es nach oben und unten schwenkt, und an ihrem äußeren freien Ende eine Rolle (68R, 68L) vorgesehen ist, die dort so drehbar angelenkt ist, dass sie auf dem Boden rollt.

9. Einrichtung nach einem der Ansprüche 1 - 8, bei welcher die Vorderrad-Einstellvorrichtung (5) weiterhin einen Streckmechanismus (22) aufweist, um die Auslenkungsverhinderungsteile (4R, 4L) an der rechten und linken Seite näher zueinander oder weiter weg voneinander zu bewegen, synchron und symmetrisch, sowie einen Druckbeaufschlagungsmechanismus (23) zum Drücken der Auslenkungsverhinderungsteile (4R, 4L) gegen die Seitenoberflächen in Querrichtung der Vorderräder (FW) mit Hilfe des Streckmechanismus (22); der Boden mit rechten und linken, schwebenden Tischen (9) versehen ist, um die Vorderräder (FW) abzufangen; die schwebenden Tische (9) jeweils einen Tischkörper (73) aufweisen, der sich in Querrichtung bewegen kann, und eine Feder (75), um den Tischkörper (73) in einer neutralen Position zu halten, wodurch die Vorderräder (FW) in Querrichtung zusammen mit dem Tischkörper (73) durch einen Druckbeaufschlagungsvorgang der Auslenkungsverhinderungsteile (4R, 4L) gegen die Vorderräder in Querrichtung zentriert werden können, wenn sich die Vorderräder auf dem Tischkörper (73) befinden.

## Revendications

1. Dispositif servant à déplacer un corps d'automobile (M) muni de roues le long d'un trajet de transport (L) prédéterminé, comprenant :
un moyen de maintien (8) de roues avant comportant une paire d'éléments de maintien arrière (7R, 7L) adaptés pour être positionnés du côté arrière des roues avant (FW) du corps d'automobile (M),
et une paire d'éléments de maintien avant (6R, 6L) adaptés pour être positionnés du côté avant des roues avant (FW); et
un moyen d'entraînement (3) adapté pour déplacer le moyen de maintien (8) de roues avant le long du trajet de transport (L);
**caractérisé en ce que**
les éléments de maintien arrière (7R, 7L) sont adaptés pour pousser les roues avant (FW) par leur côté arrière tout en maintenant le contact avec la surface périphérique extérieure des roues avant (FW) qui roulent d'elles-mêmes;
les éléments de maintien avant (6R, 6L) sont adaptés pour empêcher les roues avant (FW) de s'éloigner, en roulant vers l'avant, des éléments de maintien arrière (7R, 7L);
un moyen de réglage (5) de la direction des roues avant est prévu, lequel est déplacé d'un seul tenant avec le moyen de maintien (8) de roues avant; et
le moyen de réglage (5) de la direction des roues avant comporte des éléments anti-déviation droit et gauche (4R, 4L) servant à régler la direction de déplacement de roues avant (FW) sur la direction de transport en touchant les surfaces latérales des roues avant (FW) qui roulent d'elles-mêmes.

2. Dispositif selon la revendication 1, dans lequel le trajet de transport comporte une paire de voies de roulement de roue,
ledit moyen d'entraînement comprend un convoyeur (3) adapté pour se déplacer au milieu entre les voies le long du trajet,
lesdits éléments anti-déviation (4R, 4L) du moyen de réglage (5) de la direction des roues avant sont supportés chacun sur le convoyeur (3) et sont agencés de façon à pouvoir être basculés de façon commutable entre une position de fonctionnement (Y) devant la roue avant (FW) adjacente et une position d'attente (X) décalée vers l'intérieur par rapport aux voies de roulement de la roue associée.

3. Dispositif selon la revendication 2, dans lequel lesdits éléments de maintien avant et arrière (6R, 6L, 7R, 7L) du moyen de maintien (8) de roues avant comportent chacun une extrémité de base supportée par le convoyeur (3) au moyen d'une broche verticale (41R, 41L, 42R, 42L) pouvant pivoter horizontalement de sorte qu'il est possible de faire passer les éléments de maintien avant (6R, 6L) des positions de fonctionnement (Y) aux positions d'attentes (X) en les faisant pivoter vers l'avant sur 90 degrés, et de faire passer les éléments de maintien arrière (7R, 7L) des positions de fonctionnement (Y) aux positions d'attentes (X) en les faisant pivoter vers l'arrière sur 90 degrés.

4. Dispositif selon la revendication 3, dans lequel ledit convoyeur (3) du moyen d'entraînement est muni d'une paire de pièces coulissantes d'entraînement avant et arrière (52, 62) pouvant coulisser en avant et en arrière, les éléments de maintien avant et arrière (6R, 6L, 7R, 7L) comportent un bras (54a, 64a) au niveau de l'extrémité de base interconnecté par une liaison (55R, 5L, 65R, 65L) aux pièces coulissantes avant et arrière (52, 62), respectivement, de sorte que les éléments de maintien (6R, 6L, 7R, 7L) pivotent horizontalement sur 90 degrés en coulissant en avant et en arrière, les bras (54a, 64a) sont dirigés vers l'avant ou vers l'arrière lorsque les éléments de maintien avant et arrière (6R, 6L, 7R, 7L) sont mis en position de fonctionnement (Y), et les liaisons au moins entre les éléments de maintien arrière (7R, 7L) et la pièce coulissante arrière (62) sont dirigées latéralement lorsque les éléments de maintien sont mis en position de fonctionnement (Y).

5. Dispositif selon l'une quelconque des revendications 1 à 4, dans lequel les éléments anti-déviation droit et gauche (4R, 4L) du moyen de réglage (5) de la direction des roues avant comprennent chacun une paire de rouleaux avant et arrière adaptés pour venir au contact de la surface latérale de la roue avant (FW) adjacente en des positions inférieures avant et arrière par rapport à un essieu connecté aux roues avant, et une paire des rouleaux est agencée avec une inclinaison telle que l'axe de chacun des rouleaux s'étend près de l'essieu de la roue.

6. Dispositif selon l'une quelconque des revendications 1 à 5, dans lequel les éléments de maintien avant et arrière (6R, 6L, 7R, 7L) du moyen de maintien (8) de roues avant comprennent chacun un rouleau allongé.

7. Dispositif selon l'une quelconque des revendications 1 à 6, dans lequel les éléments de maintien arrière (7R, 7L) du moyen de maintien (8) de roues avant comprennent chacun un rouleau allongé dont le diamètre augmente vers une extrémité libre extérieure de celuici.

8. Dispositif selon l'une quelconque des revendications 1 à 7, dans lequel les éléments de maintien arrière (7R, 7L) du moyen de maintien (8) de roues avant ont chacun l'extrémité de base qui pivote sur le moyen d'entraînement grâce à une broche horizontale (66) afin de pivoter verticalement, et ont l'extrémité libre extérieure munie d'un rouleau (68R, 68L) monté dessus à pivotement afin de rouler sur le sol.

9. Dispositif selon l'une quelconque des revendications 1 à 8, dans lequel le moyen de réglage (5) des roues avant comprend en outre un mécanisme d'étirement (22) servant à rapprocher ou éloigner l'un de l'autre les éléments anti-déviation (4R, 4L) sur les côtés droit et gauche, en synchronisation et de manière symétrique, et un mécanisme de pressage (23) servant à presser les éléments anti-déviation (4R, 4L) contre les surfaces latérales des roues avant (FW) grâce audit mécanisme d'étirement (22); le sol est muni de tables mobiles droite et gauche (9) servant à soutenir les roues avant (FW); les tables mobiles (9) comportant chacune un corps (73) de table pouvant se déplacer latéralement, et un ressort (75) servant à maintenir le corps (73) de table en une position neutre, grâce à quoi les roues avant (FW) peuvent être centrées latéralement en même temps que le corps (73) de table par une opération de pressage des éléments anti-déviation (4R, 4L) contre les roues avant lorsque les roues avant sont sur le corps (73) de table.
